# EUROPEAN PATENT SPECIFICATION

(11) **EP 4 029 125 B1**
(45) Date of publication and mention of the grant of the patent: **29.04.2026**
(21) Application number: 20797395.9
(22) Date of filing: 13.10.2020
(51) Int. Cl.: H02K 3/28, H02K 3/18, H02K 7/18

(54) **CONCENTRATED WINDING LAYOUT FOR A STATOR OF AN ELECTRICAL AC MACHINE**
WICKELSCHEMA EINER KONZENTRIERTEN WICKLUNG FÜR EINEN STATOR EINER ELEKTRISCHEN WECHSELSTROMMASCHINE
SCHÉMA DE BOBINAGE D'UN ENROULEMENT CONCENTRÉ POUR UN STATOR D'UNE MACHINE ÉLECTRIQUE À COURANT ALTERNATIF

(30) Priority: 18.11.2019 EP 19209786
(43) Date of publication of application: 20.07.2022
(73) Proprietor: Siemens Gamesa Renewable Energy A/S, 7330 Brande (DK)
(72) Inventor: CHRISTIANSEN, Poul, 8653 Them (DK); DUKE, Alexander, Sheffield S10 5SN (GB); SOERENSEN, Ruben Bak, 7080 Borkop (DK)
(74) Representative: SGRE-Association
(86) International application number: PCT/EP2020/078796
(87) International publication number: WO 2021/099033

(56) References cited:
- FR-A1- 3 031 421
- JP-A- 2016 077 125
- US-B2- 8 264 114

## Description

### Field of invention

The present invention relates to a concentrated winding layout for a stator of an electrical AC machine.

Particularly, but not exclusively the present invention may relate to a concentrated winding layout for a stator of a generator of a wind turbine. The present invention further relates to a manufacturing method for manufacturing an electrical AC machine including a concentrated winding layout in the stator of the electrical AC machine.

### Art Background

Designing poly-phase AC electric machines with a winding layout having two or more coils per slot requires particular attention in providing an effective electrical insulation system.

Firstly, the machine stator magnet-winding shall be insulated from the stator by an insulation part, commonly annotated ground-wall or main-wall insulation. If the machine is designed for a single-layer (i.e. one coil per slot) winding layout, then main-wall insulation is sufficient - given that the magnet wires/strands are turn-turn insulated. If the machine is designed with two (double-layer winding layout) or more coil per slot, then it could be needed to add phase separators inside each slot to insulate each phase from one another. The dimensions, in particular the thickness, of the phase separators depends on the maximum voltage difference between the coils belonging to different phases, which are housed next to each other in the same slot and which need therefore to be separated by the phase separator.

The above described problem is particularly relevant in poly-phase AC electric machines having more than three phases. For larger machines such as some generators for offshore wind turbines, the generator windings can be split up in two three phase system (six-phase AC electric machines), fed from two independently voltage converters each producing three-phase sinusoidal waveforms. The two three phase systems may be typically provided in series to each other and electrically separated by a phase angle of 30° or 60° (any other phase angle shift is possible). Shifting one of the converter systems to produce angle difference from the two presents the opportunity to reduce torque ripple. This method also gives great flexibility in combining the winding configuration of the machine to minimize voltage stresses.

Polyphase AC electric machines of the above type are for example described in US 8264114 B2.

However, in the known poly-phase AC electric machines with concentrated winding layout the voltage difference between phases housed in the same slot may be improved.

### Summary of the Invention

The above described need may be met by the subject matter according to the independent claims. Advantageous embodiments of the present invention are described by the dependent claims.

According to a first aspect of the present invention an electrical AC generator is provided, which comprises:
a stator having a plurality of teeth distributed along a circumferential direction from a first tooth to a last tooth and a plurality of slots alternating with the plurality of teeth in the circumferential direction,
a rotor rotatable with respect to the stator around a rotational axis, the rotation direction of the rotor being opposite to the circumferential direction,
a concentrated star-connected winding layout comprising a plurality of coils respectively wound on the plurality of teeth and belonging to at least six phases, the coils being wound so that
   when considering three adjacent coils the intermediate coil is interposed between one coil wound in the same direction of the intermediate coil and another coil wound in the opposite direction of the intermediate coil,
each slot of the plurality of slots housing at least two coils of said plurality of coils, each phase of the at least six phases comprising a first coil and a second coil, the second coil of one phase being wound in opposite direction with respect to the respective first coil of the same phase,
a plurality of interconnections connecting the first and the second coil of each phase,
wherein the plurality of slots comprises a first set of slots and a second set of slots alternating with the first set of slots in the circumferential direction, wherein connections of the coils with an input conductor of one phase or with a neutral conductor are led out only from the first set of slots, each of the interconnections extending only between two respective slots of the second set of slots.

According to a second aspect of the present invention a method of manufacturing the above described electrical AC machine is provided.

According to the present invention the thickness of the phase separator between two coils in the same slot may be minimized, as a consequence of the reduction of the voltage difference between the respective phases, which is experience when using the above described winding layout. Eventually, according to possible embodiments of the present invention, such phase separator may not be present, the voltage differences being reduced to a minimum or null value.

The electrical AC machine of the present invention may a permanent magnet synchronous electrical machine. The electrical machine is a generator, in particular a generator included in a wind turbine.

According to embodiments of the present invention, the concentrated winding layout comprises at least a first set of coils and a second set of coils, respectively corresponding to a first set of three phases and to a second set of three phases of the concentrated winding layout. In such embodiments, the first set of coils is electrically connected in series to the second set of coils. The first set of coils and the second set of coils may be electrically separated by a phase angle of 30° or of 60°. The present invention is a concentrated winding layout having at least six phases.

Embodiments of the present invention are now described with reference to the accompanying drawings. The invention is not restricted to the illustrated or described embodiments. The scope of protection for the invention is defined by the appended claims.

### Brief Description of the Drawings

Fig. 1 shows a schematic section of a wind turbine including an electrical AC machine according to the present invention;
Fig. 2 shows a schematic diagram of a 6-phase concentrated winding layout according to the present invention;
Fig. 3 shows a voltage vector diagram of the concentrated winding layout of Fig. 2;
Fig. 4 shows a schematic arrangement of the concentrated winding layout of Figs. 2 and 3;
Fig. 5 shows a first embodiment of a connection arrangements of the concentrated winding layout of Fig. 4;
Fig. 6 shows a schematic physical arrangement for the connection arrangement of Fig. 5;
Fig. 7 shows a second embodiment of a connection arrangements of the concentrated winding layout of Fig. 4;
Fig. 8 shows a schematic physical arrangement for the connection arrangement of Fig. 7;
Fig. 9 shows a third embodiment of a connection arrangements of the concentrated winding layout of Fig. 4;
Fig. 10 shows a schematic physical arrangement for the connection arrangement of Fig. 9;
Fig. 11 shows a slot of a stator of an electrical AC machine according to the present invention.

### Detailed Description

The illustrations in the drawings are schematic. It is noted that in different figures, similar or identical elements are provided with the same reference signs.

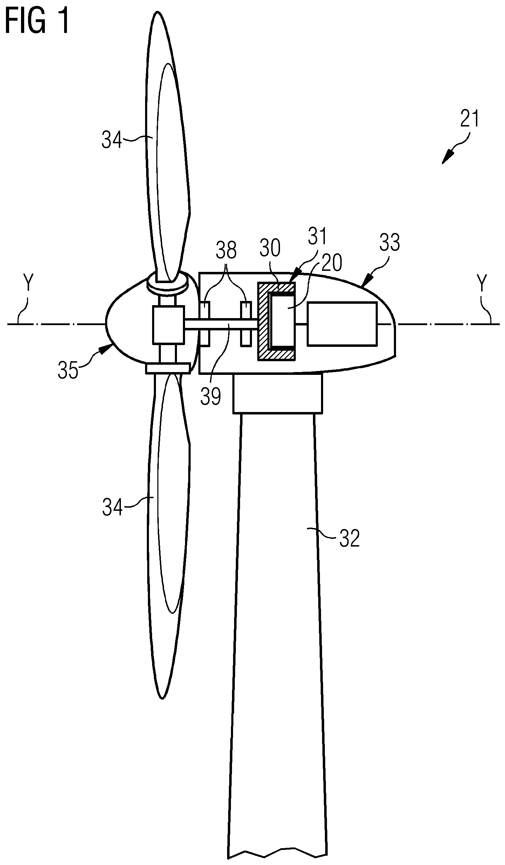

**Figure 1** shows a wind turbine 21 according to the invention. The wind turbine 21 comprises a tower 32, which is mounted on a non-depicted foundation. A nacelle 33 is arranged on top of the tower 32. The wind turbine 21 further comprises a wind rotor 35 having at least one blade 34 (in the embodiment of Figure 1, the wind rotor comprises three blades 34, of which only two blades 34 are visible). The wind rotor 35 is rotatable around a rotational axis Y. The blades 34 extend substantially radially with respect to the rotational axis Y. The wind turbine 21 comprises an electric generator 31, including a stator 20 and a rotor 30. The rotor 30 is rotatable with respect to the stator 20 about the rotational axis Y. The wind rotor 35 is rotationally coupled with the electric generator 31 either directly, e.g. direct drive or by means of a rotatable main shaft 39 and/or through a gear box (not shown in Figure 1). A schematically depicted bearing assembly 38 is provided in order to hold in place the main shaft 39 and the rotor 35. The rotatable main shaft 9 extends along the rotational axis Y.

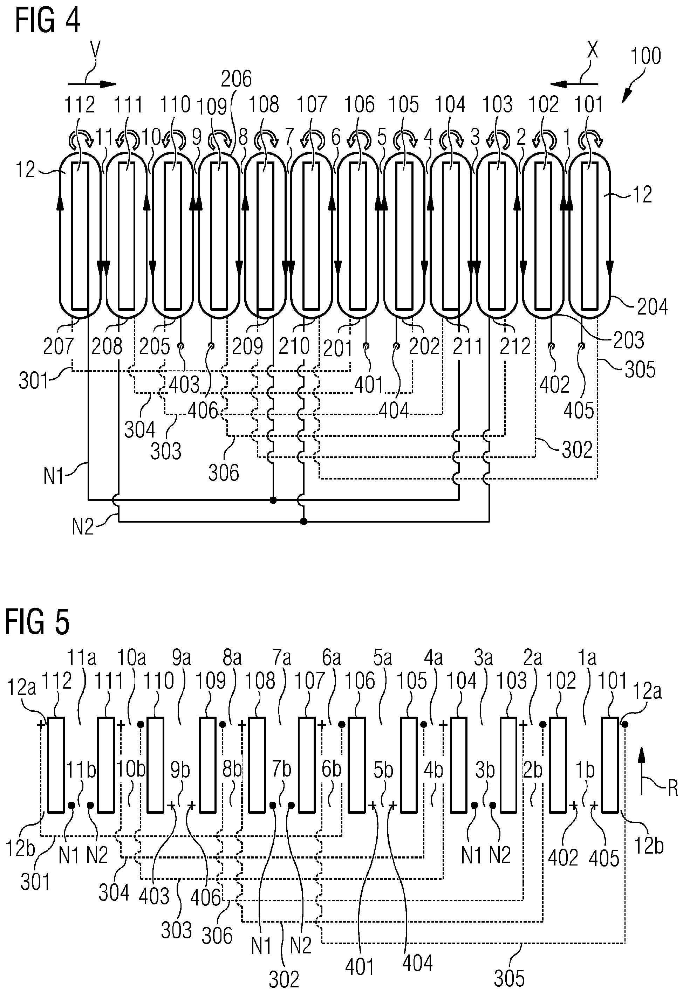

As shown in Figures 5 to 10 the stator 20 has a plurality of teeth 101, 102, 103, 104 , 105, 106, 107, 108, 109, 110, 111, 112 alternating with a plurality of slots 1, 2, 3, 4, 5, 6, 7, 8, 9, 10, 11, 12 in a circumferential direction X of the stator 20, circumferentially orientated with respect to the rotational axis Y. The rotation direction V of the rotor 30 is opposite to the circumferential direction X. Each of the plurality of slots 1, 2, 3, 4, 5, 6, 7, 8, 9, 10, 11, 12 extends along a radial direction R, i.e. orthogonally to the the rotational axis Y, from a respective slot bottom 1b, 2b, 3b, 4b, 5b, 6b, 7b, 8b, 9b, 10b, 11b, 12b to a respective slot top 1a, 2a, 3a, 4a, 5a, 6a, 7a, 8a, 9a, 10a, 11a, 12a. According to the present invention the electric generator 31 includes a concentrated winding layout 100 comprising a plurality of coils 201, 202, 203, 204, 205, 206, 207, 208, 209, 210, 211, 212 wound on the plurality teeth 101, 102, 103, 104, 105, 106, 107, 108, 109, 110, 111, 112 and belonging to at least six phases A1, A2, B1, B2, C1, C2. The coils are wound so that, when considering three adjacent coils along the circumferential direction X, the intermediate coil, which is interposed between the other two adjacent coils, is wound in one first direction (clockwise or counterclockwise), while one of the other two coils is wound in the same direction of the intermediate coil (clockwise or counterclockwise) and the other coil is wound in the opposite direction of the intermediate coil (counterclockwise or counterclockwise). Each slot 1, 2, 3, 4, 5, 6, 7, 8, 9, 10, 11, 12 houses at least two coils, each phase A1, A2, B1, B2, C1, C2 comprising a first coil 201, 202, 203, 204, 205, 206 and a second coil 207, 208, 209, 210, 211, 212, the second coil 207, 208, 209, 210, 211, 212 of one phase being wound in opposite direction with respect to the respective first coil 201, 202, 203, 204, 205, 206 of the same phase. A plurality of interconnections 301, 302, 303, 304, 305, 306 are provided for connecting the first and the second coil of each phase. The plurality of slots comprises a first set of slots 1, 3, 5, 7, 9, 11 and a second set of slots 2, 4, 6, 8, 10, 12 alternating with the first set of slots 2, 4, 6, 8, 10, 12 in the circumferential direction X. In the embodiments of the attached figures the first set of slots 1, 3, 5, 7, 9, 11 are coincident with the odd slots (first, third, fifth, seventh, ninth and eleventh), while the second set of slots 2, 4, 6, 8, 10, 12 is coincident with the even slots (second, fourth, sixth, eight, tenth and twelfth). Each coil 201, 202, 203, 204, 205, 206, 207, 208, 209, 210, 211, 212 in the first set of slots 1, 3, 5, 7, 9, 11 is connected to an input conductor 401, 402, 403, 404, 405, 406 of one phase A1, A2, B1, B2, C1, C2 or to a neutral conductor N1, N2. Each of the interconnections 301, 302, 303, 304, 305, 306 extends between two respective slots of the second set of slots 2, 4, 6, 8, 10, 12.

The coils 201, 202, 203, 204, 205, 206, 207, 208, 209, 210, 211, 212 and the interconnections 301, 302, 303, 304, 305, 306 may carry respective insulations on the respective surfaces.

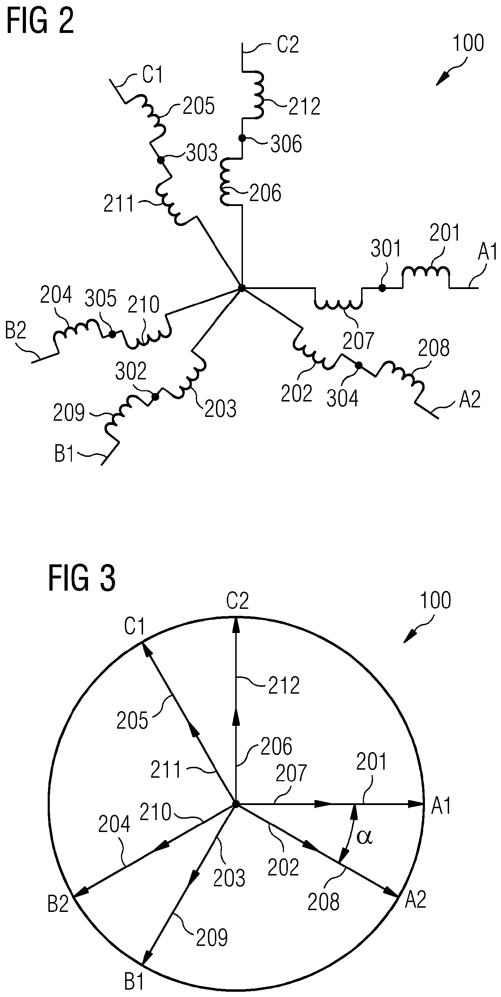

**Figure 2** schematically shows for each phase A1, A2, B1, B2, C1, C2 the respective first coil 201, 202, 203, 204, 205, 206 and second coil 207, 208, 209, 210, 211, 212 as detailed in the following. Each interconnection 301, 302, 303, 304, 305, 306 is schematically represented by a point.

**Figure 3** schematically shows the correspondent voltage vector diagram. The first set of coils 201, 203, 205, 207, 209, 211 are electrically separated from the second set of coils 202, 204, 206, 208, 210, 212 by a phase angle α of 30°. According to other embodiments of the present invention (not shown), the phase angle α may have any other value, for example 60°.

**Figure 4** shows a schematic arrangement of the concentrated winding layout 100, seen from the radial top of the teeth (the radial direction is perpendicular to the drawing of figure 4). The concentrated winding layout 100 comprises a first set of coils 201, 203, 205, 207, 209, 211 and a second set of coils 202, 204, 206, 208, 210, 212, respectively corresponding to a first set of three phases A1, B1, C1 and to a second set of three phases A2, B2, C2. Each first set of coils 201, 203, 205, 207, 209, 211 and of the second set of coils 202, 204, 206, 208, 210, 212 correspond to a respective three-phase system. The first set of coils 201, 203, 205, 207, 209, 211 is connected through three respective interconnections 301, 302, 303. The second set of coils 202, 204, 206, 208, 210, 212 is connected through three other respective interconnections 304, 305, 306. According to other embodiments of the present invention (not shown), the concentrated winding layout may include a different number of phases, for example more than two three-phase systems. The first set of coils 201, 203, 205, 207, 209, 211 is electrically connected in series to the second set of coils 202, 204, 206, 208, 210, 212. The coils 201, 202, 203, 204, 205, 206, 207, 208, 209, 210, 211, 212 are respectively wound on the teeth 106, 105, 102, 101, 110, 109, 112, 111, 108, 107, 104, 105. In the view of figure 4, the coils 201, 203, 205, 208, 210, 212 (i.e. the first three coils of the first set of coils and the last three coils of the second set of coils) are wound counterclockwise, while the other coils 202, 204, 206, 207, 209, 211 (i.e. the first three coils of the second set of coils and the last three coils of the first set of coils) are wound clockwise. According to other embodiments of the present invention (not shown), the coils 201, 203, 205, 208, 210, 212 may be wound clockwise, while the other coils 202, 204, 206, 207, 209, 211 may be wound counterclockwise.

The first set of coils 201, 203, 205, 207, 209, 211 comprises:
- a first coil 201 of a first phase A1,
- a first coil 203 of a second phase B1,
- a first coil 205 of a third phase C1,
- a second coil 207 of the first phase A1 connected to the first coil 201 of the first phase A1 through a first interconnection 301,
- a second coil 209 of the second phase B1 connected to the first coil 203 of the second phase B1 through a second interconnection 302,
- a second coil 211 of the third phase C1 connected to the first coil 205 of the third phase C1 through a third interconnection 303.

The first set of coils 201, 203, 205, 207, 209, 211 is connected in the slots 1, 2, 3, 4, 5, 6, 7, 8, 9, 10, 11, 12 in such a way that:
- the first coil 201 of the first phase A1 is wound between the input conductor 401 of the first phase A1 and the first interconnection 301,
- the first coil 203 of the second phase B1 is wound between the second interconnection 302 and the input conductor 402 of the second phase B1,
- the first coil 205 of the third phase C1 is wound between the third interconnection 303 and the input conductor 403 of the third phase C1,
- the second coil 207 of the first phase A1 is wound between a first neutral output conductor N1 and the first interconnection 301,
- the second coil 209 of the second phase B1 is wound between the first neutral output conductor N1 and the second interconnection 302,
- the second coil 211 of the third phase C1 is wound between the first neutral output conductor N1 and the third interconnection 303.

The second set of coils 202, 204, 206, 208, 210, 212 comprises:
- a first coil 202 of a first phase A2,
- a first coil 204 of a second phase B2,
- a first coil 206 of a third phase C2,
- a second coil 208 of the first phase A2 connected to the first coil 202 of the first phase A2 through a fourth interconnection 304,
- a second coil 210 of the second phase B2 connected to the first coil 204 of the second phase B2 through a fifth interconnection 305,
- a second coil 212 of the third phase C2 connected to the first coil 206 of the third phase C2 through a sixth interconnection 306.

The second set of coils 202, 204, 206, 208, 210, 212 is connected in the slots 1, 2, 3, 4, 5, 6, 7, 8, 9, 10, 11, 12 in such a way that:
- the first coil 202 of the first phase A2 is wound between the input conductor 404 of the first phase A2 and the fourth interconnection 304,
- the first coil 204 of the second phase B2 is wound between the fifth interconnection 305 and the input conductor 405 of the second phase B2,
- the first coil 206 of the third phase C2 is wound between the sixth interconnection 306 and the input conductor 406 of the third phase C2,
- the second coil 208 of the first phase A2 is wound between a second neutral output conductor N2 and the fourth interconnection 304,
- the second coil 210 of the second phase B2 is wound between the second neutral output conductor N2 an and the fifth interconnection 305,
- the second coil 212 of the third phase C2 is wound between the second neutral output conductor N2 and the sixth interconnection 306.

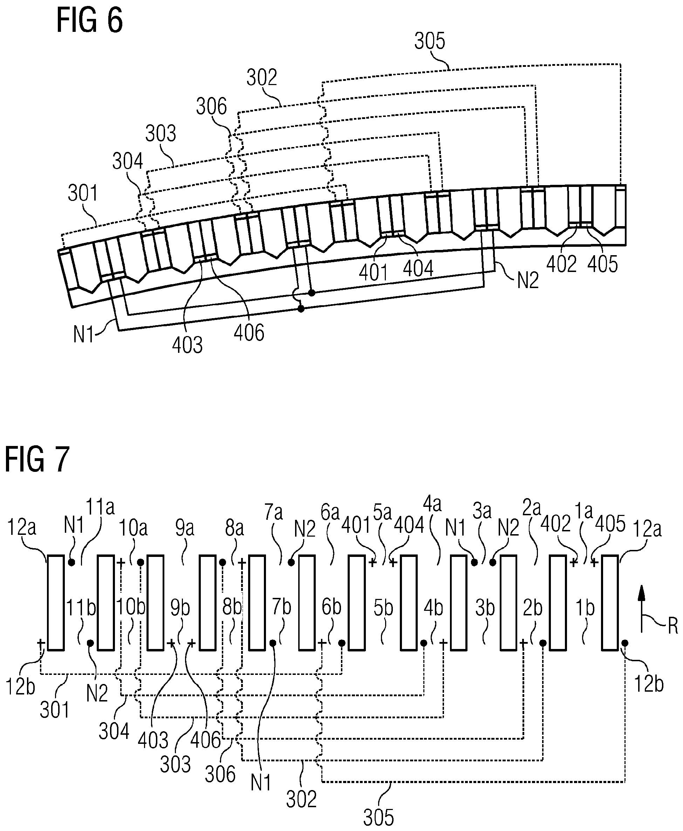

In the first embodiment of **Figures 5** and **6****,** the connections with the first and second neutral output conductors N1, N2 and the input conductors 401, 402, 403, 404, 405, 406 are provided at respective slot bottoms 1b, 3b, 5b, 7b, 9b, 11b. In particular (figure 5):
- at the slot bottom 1b of the first slot 1, between the first and second teeth 101, 102, there are provided the connections with the input conductors 402, 405 of the second phases B1, B2,
- at the slot bottom 3b of the third slot 3, between the third and fourth teeth 103, 104, there are provided the connections with the first and second neutral output conductors N1, N2,
- at the slot bottom 5b of the fifth slot 5, between the fifth and sixth teeth 105, 106, there are provided the connections with the input conductors 401, 404 of the first phases A1, A2,
- at the slot bottom 7b of the seventh slot 7, between the seventh and eighth teeth 107, 108, there are provided the connections with the first and second neutral output conductors N1, N2,
- at the slot bottom 9b of the ninth slot 9, between the ninth and tenth teeth 109, 110, there are provided the connections with the input conductors 403, 406 of the third phases C1, C2,
- at the slot bottom 11b of the eleventh slot 11, between the eleventh and twelfth teeth 111, 112, there are provided the connections with the first and second neutral output conductors N1, N2.

Consequently, the connections with the interconnection 301, 302, 303, 304, 305, 306 are provided at the slot tops 2a, 4a, 6a, 8a, 10a, 12a of the other slots 2, 4, 6, 8, 10, 12, not including connections with the first and second neutral output conductors N1, N2 and the input conductors 401, 402, 403, 404, 405, 406 (figure 6).

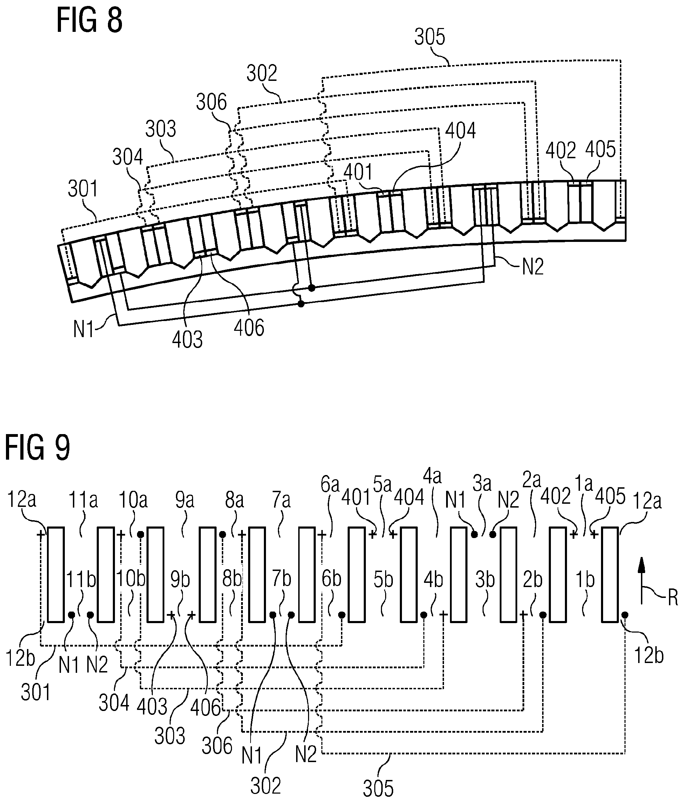

In the second embodiment of **Figures 7** and **8****,** the connections with the first and second neutral output conductors N1, N2, the input conductors 401, 402, 403, 404, 405, 406 and the interconnection 301, 302, 303, 304, 305, 306 are provided according to the following:
- at the slot top 1a of the first slot 1 there are provided the connections with the input conductors 402, 405 of the second phases B1, B2,
- at the slot bottom 2b of the second slot 2 there are provided the connections with the second and the sixth interconnection 302, 306.
- at the slot top 3a of the third slot 3 there are provided the connections with the first and second neutral output conductors N1, N2,
- at the slot bottom 4b of the fourth slot 4 there are provided the connections with the third and the fourth interconnection 303, 304,
- at the slot top 5a of the fifth slot 5 there are provided the connections with the input conductors 401, 404 of the first phases A1, A2,
- at the slot bottom 6b of the sixth slot 6 there are provided the connections with the first and the fifth interconnection 301, 305,
- in the seventh slot 7 the connections with the first and second neutral output conductors N1, N2 are provided respectively at the slot bottom 7b and at the slot top 7a,
- at the slot top 8a of the eighth slot 8 there are provided the connections with the second and the sixth interconnection 302, 306.
- at the slot bottom 9b of the ninth slot 9 there are provided the connections with the input conductors 403, 406 of the third phases C1, C2,
- at the slot top 10a of the tenth slot 10 there are provided the connections with the third and the fourth interconnection 303, 304,
- in the eleventh slot 11 the connections with the first and second neutral output conductors N1, N2 are provided respectively at the slot top 11a and at the slot bottom 11b,
- at the slot bottom 12b of the twelfth slot 12 there are provided the connections with the first and the fifth interconnection 301, 305.

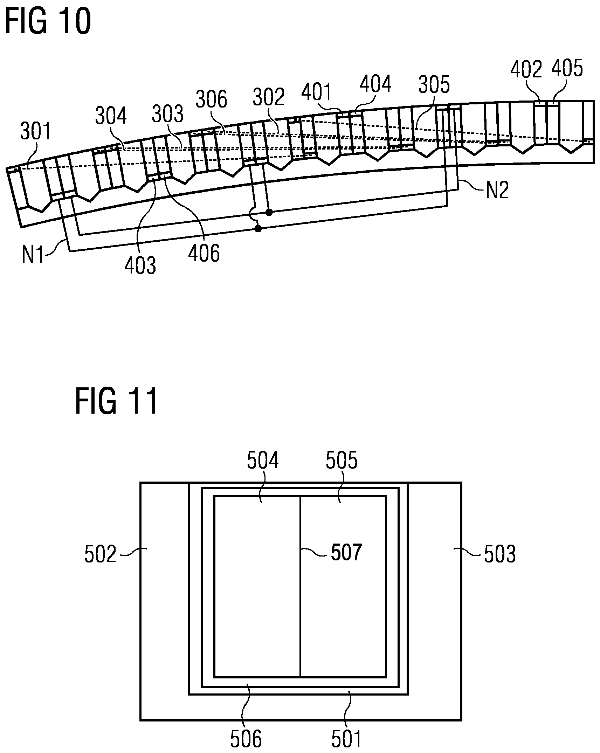

In the third embodiment of **Figures 9** and **10****,** the connections with the first and second neutral output conductors N1, N2, the input conductors 401, 402, 403, 404, 405, 406 and the interconnection 301, 302, 303, 304, 305, 306 are provided according to the following:
- at the slot top 1a of the first slot 1 there are provided the connections with the input conductors 402, 405 of the second phases B1, B2,
- at the slot bottom 2b of the second slot 2 there are provided the connections with the second and the sixth interconnection 302, 306.
- at the slot top 3a of the third slot 3 there are provided the connections with the first and second neutral output conductors N1, N2,
- at the slot bottom 4b of the fourth slot 4 there are provided the connections with the third and the fourth interconnection 303, 304,
- at the slot top 5a of the fifth slot 5 there are provided the connections with the input conductors 401, 404 of the first phases A1, A2,
- in the sixth slot 6 the connections with the first and the fifth interconnection 301, 305 are respectively provided at slot bottom 6b and at the slot top 6a,
- at the slot bottom 7b of the seventh slot 7 there are provided the connections with the first and second neutral output conductors N1, N2,
- at the slot top 8a of the eighth slot 8 there are provided the connections with the second and the sixth interconnection 302, 306.
- at the slot bottom 9b of the ninth slot 9 there are provided the connections with the input conductors 403, 406 of the third phases C1, C2,
- at the slot top 10a of the tenth slot 10 there are provided the connections with the third and the fourth interconnection 303, 304,
- at the slot bottom 11b of the eleventh slot 11 there are provided the connections with the first and second neutral output conductors N1, N2,
- in the twelfth slot 12 the connections with the first and the fifth interconnection 301, 305 are respectively provided at the slot top 12a and at the slot bottom 12b.

In the third embodiment the interconnections 301, 302, 303, 304, 305, 306 are parallel to each other (Fig. 10), i.e. each interconnection 301, 302, 303, 304, 305, 306 extend between a respective slot top and a respective slot bottom.

With reference to **Figure 11****,** a slot 501 (corresponding to any of the slots 1, 2, 3, 4, 5, 6, 7, 8, 9, 10, 11, 12 of Figure 4) between two teeth 502 and 503 is shown. The slot 501 houses two adjacent phases 504, 505. A wall insulator 506 is provided between each of the phases 504, 505 and the walls of the teeth 502 and 503. A phase separator 507 oriented radially separates the phases 504, 505 from one another. According to the present invention the thickness of the phase separator 507 can be minimized, as a consequence of the reduction of the voltage difference between the phases 504, 505. Eventually, according to possible embodiment of the present invention, the phase separator 507 is not present the voltage difference between the phases 504, 505 being reduced to a minimum or null value. In such cases the insulation on the surface of the coils of each phase 504, 505 is enough to provide an effective insulation between the phases 504, 505.

## Claims

1. Electrical AC generator (31) comprising:
a stator (20) having a plurality of teeth (101, 102, 103, 104 , 105, 106, 107, 108, 109, 110, 111, 112) distributed along a circumferential direction (X) from a first tooth (101) to a last tooth (112) and a plurality of slots (1, 2, 3, 4, 5, 6, 7, 8, 9, **10,** 11, 12) alternating with the plurality of teeth (101, 102, 103, 104 , 105, 106, 107, 108, 109, 110, 111, 112) in the circumferential direction (X),
a rotor (30) rotatable with respect to the stator (20) around a rotational axis (Y), the rotation direction of the rotor (30) being opposite to the circumferential direction (X),
a concentrated star-connected winding layout (100) comprising a plurality of coils (201, 202, 203, 204, 205, 206, 207, 208, 209, 210, 211, 212) respectively wound on the plurality of teeth (101, 102, 103, 104, 105, 106, 107, 108, 109, 110, 111, 112) and belonging to at least six phases (A1, A2, B1, B2, C1, C2), the coils being wound so that when considering three adjacent coils the intermediate coil is interposed between one coil wound in the same direction of the intermediate coil and another coil wound in the opposite direction of the intermediate coil,
each slot of the plurality of slots (1, 2, 3, 4, 5, 6, 7, 8, 9, 10, 11, 12) housing at least two coils of said plurality of coils (201, 202, 203, 204, 205, 206, 207, 208, 209, 210, 211, 212), each phase (A1, A2, B1, B2, C1, C2) of the at least six phases comprising a first coil (201, 202, 203, 204, 205, 206) and a second coil (207, 208, 209, 210, 211, 212), the second coil (207, 208, 209, 210, 211, 212) of one phase being wound in opposite direction with respect to the respective first coil (201, 202, 203, 204, 205, 206) of the same phase,
a plurality of interconnections (301, 302, 303, 304, 305, 306) connecting the first and the second coil of each phase,
**characterized in that** the plurality of slots (1, 2, 3, 4, 5, 6, 7, 8, 9, 10, 11, 12) comprises a first set of slots (1, 3, 5, 7, 9, 11) and a second set of slots (2, 4, 6, 8, 10, 12) alternating with the first set of slots (2, 4, 6, 8, 10, 12) in the circumferential direction (X), wherein connections of the coils (201, 202, 203, 204, 205, 206, 207, 208, 209, 210, 211, 212) with an input conductor (401, 402, 403, 404, 405, 406) of one phase (A1, A2, B1, B2, C1, C2) or with a neutral conductor (N1, N2) are led out only from the first set of slots (1, 3, 5, 7, 9, 11),
wherein each of the interconnections (301, 302, 303, 304, 305, 306) extending only between two respective slots of the second set of slots (2, 4, 6, 8, 10, 12).

2. Electrical AC generator (31) according to claim 1, wherein the concentrated winding layout (100) comprises at least a first set of coils (201, 203, 205, 207, 209, 211) and a second set of coils (202, 204, 206, 208, 210, 212), respectively corresponding to a first set of three phases (A1, B1, C1) and to a second set of three phases (A2, B2, C2) of the concentrated winding layout (100).

3. Electrical AC generator (31) according to claim 1, wherein each of the plurality of slots (1, 2, 3, 4, 5, 6, 7, 8, 9, 10, 11, 12) extends radially from a slot top (1a, 2a, 3a, 4a, 5a, 6a, 7a, 8a, 9a, 10a, 11a, 12a) to a slot bottom (1b, 2b, 3b, 4b, 5b, 6b, 7b, 8b, 9b, 10b, 11b, 12b), each connection with the input conductors (401, 402, 403, 404, 405, 406) and the neutral conductors (N1, N2) being provided at the slot bottoms (1b, 2b, 3b, 4b, 5b, 6b, 7b, 8b, 9b, 10b, 11b, 12b).

4. Electrical AC generator (31) according to claim 2 or 3, wherein the first set of slots (1, 3, 5, 7, 9, 11) comprises a first sub-set of slots (1, 5, 9) and a second sub-set of coils (3, 7, 11) alternating with the first sub-set of slots (1, 5, 9), the coils (201, 202, 205, 206, 209, 210) in the first sub-set of slots (1, 5, 9) being connected with the input conductors (401, 402, 403, 404, 405, 406) the coils (203, 204, 207, 208, 211, 212) in the second sub-set of coils (3, 7, 11) being connected with the neutral conductors.

5. Electrical AC generator (31) according to claim 4, wherein the two coils (201, 202, 205, 206, 209, 210) in each slot the first sub-set of slots (1, 5, 9) are respectively connected with an input conductor (401, 402, 403, 404, 405, 406) of the first set of three phases (A1, B1, C1) and an input conductor (401, 402, 403, 404, 405, 406) of the second set of three phases (A2, B2, C2).

6. Electrical AC generator (31) according to any claims 3 to 5, wherein each of the interconnections (301, 302, 303, 304, 305, 306) extends between the slot top (12a, 2a, 4a, 6a) of one slot (12, 2, 4, 6) to the slot bottom (6b, 8b, 10b, 12b) of another slot (6, 8, 10, 12).

7. Electrical AC machine (31) according to any claim 2 to 6, wherein the first set of coils (201, 203, 205, 207, 209, 211) is electrically connected in series to the second set of coils (202, 204, 206, 208, 210, 212).

8. Electrical AC generator (31) according to claim 7, wherein the first set of coils (201, 203, 205, 207, 209, 211) and the second set of coils (202, 204, 206, 208, 210, 212) are electrically separated by a phase angle (α) of 30° or of 60°.

9. Wind turbine (21) comprising an electrical AC generator (31) according to any of the previous claims.

10. Method of manufacturing an electrical AC generator (31) comprising:
providing a stator (20) having a plurality of teeth (101, 102, 103, 104 , 105, 106, 107, 108, 109, 110, 111, 112) distributed along a circumferential direction (X) from a first tooth (101) to a last tooth (112) and a plurality of slots (1, 2, 3, 4, 5, 6, 7, 8, 9, 10, 11, 12) alternating with the plurality of teeth (101, 102, 103, 104 , 105, 106, 107, 108, 109, 110, 111, 112) in the circumferential direction (X),
providing a rotor (30) rotatable with respect to the stator (20) around a rotational axis (Y), the rotation direction of the rotor (30) being opposite to the circumferential direction (X),
arranging a concentrated star-connected winding layout (100) comprising a plurality of coils (201, 202, 203, 204, 205, 206, 207, 208, 209, 210, 211, 212) respectively wound on the plurality of teeth (101, 102, 103, 104, 105, 106, 107, 108, 109, 110, 111, 112) and belonging to at least six phases (A1, A2, B1, B2, C1, C2), the coils being wound so that when considering three adjacent coils the intermediate coil is interposed between one coil wound in the same direction of the intermediate coil and another coil wound in the opposite direction of the intermediate coil, each slot of the plurality of slots (1, 2, 3, 4, 5, 6, 7, 8, 9, 10, 11, 12) housing at least two coils of said plurality of coils (201, 202, 203, 204, 205, 206, 207, 208, 209, 210, 211, 212), each phase (A1, A2, B1, B2, C1, C2) of the at least six phases comprising a first coil (201, 202, 203, 204, 205, 206) and a second coil (207, 208, 209, 210, 211, 212), the second coil (207, 208, 209, 210, 211, 212) of one phase being wound in opposite direction with respect to the respective first coil (201, 202, 203, 204, 205, 206) of the same phase,
arranging a plurality of interconnections (301, 302, 303, 304, 305, 306) connecting the first and the second coil of each phase,
**characterized in that** the plurality of slots (1, 2, 3, 4, 5, 6, 7, 8, 9, 10, 11, 12) comprises a first set of slots (1, 3, 5, 7, 9, 11) and a second set of slots (2, 4, 6, 8, 10, 12) alternating with the first set of slots (2, 4, 6, 8, 10, 12) in the circumferential direction (X), wherein connections of the coils (201, 202, 203, 204, 205, 206, 207, 208, 209, 210, 211, 212) with an input conductor (401, 402, 403, 404, 405, 406) of one phase (A1, A2, B1, B2, C1, C2) or with a neutral conductor (N1, N2) are led out only from the first set of slots (1, 3, 5, 7, 9, 11),
wherein each of the interconnections (301, 302, 303, 304, 305, 306) extending only between two respective slots of the second set of slots (2, 4, 6, 8, 10, 12).

11. Method according to the preceding claim, wherein the concentrated winding layout (100) comprises at least a first set of coils (201, 203, 205, 207, 209, 211) and a second set of coils (202, 204, 206, 208, 210, 212) electrically connected in series with the first set of coils (201, 203, 205, 207, 209, 211), respectively corresponding to a first set of three phases (A1, B1, C1) and to a second set of three phases (A2, B2, C2) of the concentrated winding layout (100).

## Patentansprüche

1. Elektrischer Wechselstromerzeuger (31), umfassend:
einen Stator (20), der eine Vielzahl von Zähnen (101, 102, 103, 104, 105, 106, 107, 108, 109, 110, 111, 112), die entlang einer Umfangsrichtung (X) von einem ersten Zahn (101) zu einem letzten Zahn (112) verteilt sind, und eine Vielzahl von Schlitzen (1, 2, 3, 4, 5, 6, 7, 8, 9, 10, 11, 12), die sich mit der Vielzahl von Zähnen (101, 102, 103, 104, 105, 106, 107, 108, 109, 110, 111, 112) in der Umfangsrichtung (X) abwechseln, aufweist,
einen Rotor (30), der in Bezug auf den Stator (20) um eine Drehachse (Y) drehbar ist, wobei die Drehrichtung des Rotors (30) der Umfangsrichtung (X) entgegengestellt ist,
eine konzentrierte sterngeschaltete Wicklungsgestaltung (100), umfassend eine Vielzahl von Spulen (201, 202, 203, 204, 205, 206, 207, 208, 209, 210, 211, 212), die jeweils auf der Vielzahl von Zähnen (101, 102, 103, 104, 105, 106, 107, 108, 109, 110, 111, 112) gewickelt sind und zu mindestens sechs Phasen (A1, A2, B1, B2, C1, C2) gehören, wobei die Spulen so gewickelt sind, dass in Anbetracht dreier benachbarter Spulen die Zwischenspule zwischen einer Spule, die in der gleichen Richtung wie die Zwischenspule gewickelt ist, und einer anderen Spule, die in der entgegengestellten Richtung zu der Zwischenspule gewickelt ist, eingefügt ist,
wobei jeder Schlitz der Vielzahl von Schlitzen (1, 2, 3, 4, 5, 6, 7, 8, 9, 10, 11, 12) mindestens zwei Spulen der Vielzahl von Spulen (201, 202, 203, 204, 205, 206, 207, 208, 209, 210, 211, 212) beherbergt, wobei jede Phase (A1, A2, B1, B2, C1, C2) der mindestens sechs Phasen eine erste Spule (201, 202, 203, 204, 205, 206) und eine zweite Spule (207, 208, 209, 210, 211, 212) umfasst, wobei die zweite Spule (207, 208, 209, 210, 211, 212) einer Phase in einer entgegengestellten Richtung in Bezug auf die jeweilige erste Spule (201, 202, 203, 204, 205, 206) der gleichen Phase gewickelt ist,
eine Vielzahl von Zwischenverbindungen (301, 302, 303, 304, 305, 306), welche die erste und die zweite Spule jeder Phase verbinden,
**dadurch gekennzeichnet, dass** die Vielzahl von Schlitzen (1, 2, 3, 4, 5, 6, 7, 8, 9, 10, 11, 12) einen ersten Satz von Schlitzen (1, 3, 5, 7, 9, 11) und einen zweiten Satz von Schlitzen (2, 4, 6, 8, 10, 12) umfasst, der sich mit dem ersten Satz von Schlitzen (2, 4, 6, 8, 10, 12) in der Umfangsrichtung (X) abwechselt, wobei Verbindungen der Spulen (201, 202, 203, 204, 205, 206, 207, 208, 209, 210, 211, 212) mit einem Eingabeleiter (401, 402, 403, 404, 405, 406) einer Phase (A1, A2, B1, B2, C1, C2) oder mit einem Neutralleiter (N1, N2) nur aus dem ersten Satz von Schlitzen (1, 3, 5, 7, 9, 11) herausgeführt sind,
wobei sich jede der Zwischenverbindungen (301, 302, 303, 304, 305, 306) nur zwischen zwei jeweiligen Schlitzen des zweiten Satzes von Schlitzen (2, 4, 6, 8, 10, 12) erstreckt.

2. Elektrischer Wechselstromerzeuger (31) nach Anspruch 1, wobei die konzentrierte Wicklungsgestaltung (100) mindestens einen ersten Satz von Spulen (201, 203, 205, 207, 209, 211) und einen zweiten Satz von Spulen (202, 204, 206, 208, 210, 212) umfasst, die einem ersten Satz dreier Phasen (A1, B1, C1) beziehungsweise einem zweiten Satz dreier Phasen (A2, B2, C2) der konzentrierten Wicklungsgestaltung (100) entsprechen.

3. Elektrischer Wechselstromerzeuger (31) nach Anspruch 1, wobei sich jeder der Vielzahl von Schlitzen (1, 2, 3, 4, 5, 6, 7, 8, 9, 10, 11, 12) von einer Schlitzoberseite (1a, 2a, 3a, 4a, 5a, 6a, 7a, 8a, 9a, 10a, 11a, 12a) zu einer Schlitzunterseite (1b, 2b, 3b, 4b, 5b, 6b, 7b, 8b, 9b, 10b, 11b, 12b) radial erstreckt, wobei jede Verbindung mit den Eingabeleitern (401, 402, 403, 404, 405, 406) und den Neutralleitern (N1, N2) an den Schlitzunterseiten (1b, 2b, 3b, 4b, 5b, 6b, 7b, 8b, 9b, 10b, 11b, 12b) bereitgestellt ist.

4. Elektrischer Wechselstromerzeuger (31) nach Anspruch 2 oder 3, wobei der erste Satz von Schlitzen (1, 3, 5, 7, 9, 11) einen ersten Teilsatz von Schlitzen (1, 5, 9) und einen zweiten Teilsatz von Schlitzen (3, 7, 11) umfasst, der sich mit dem ersten Teilsatz von Schlitzen (1, 5, 9) abwechselt, wobei die Spulen (201, 202, 205, 206, 209, 210) in dem ersten Teilsatz von Schlitzen (1, 5, 9) mit den Eingabeleitern (401, 402, 403, 404, 405, 406) verbunden sind, wobei die Spulen (203, 204, 207, 208, 211, 212) in dem zweiten Satz von Spulen (3, 7, 11) mit den Neutralleitern verbunden sind.

5. Elektrischer Wechselstromerzeuger (31) nach Anspruch 4, wobei die zwei Spulen (201, 202, 205, 206, 209, 210) in jedem Schlitz der erste Teilsatz von Schlitzen (1, 5, 9) mit einem Eingabeleiter (401, 402, 403, 404, 405, 406) des ersten Satzes dreier Phasen (A1, B1, C1) beziehungsweise einem Eingabeleiter (401, 402, 403, 404, 405, 406) des zweiten Satzes dreier Phasen (A2, B2, C2) verbunden sind.

6. Elektrischer Wechselstromerzeuger (31) nach beliebigen Ansprüchen 3 bis 5, wobei sich jede der Zwischenverbindungen (301, 302, 303, 304, 305, 306) zwischen der Schlitzoberseite (12a, 2a, 4a, 6a) eines Schlitzes (12, 2, 4, 6) zu der Schlitzunterseite (6b, 8b, 10b, 12b) eines anderen Schlitzes (6, 8, 10, 12) erstreckt.

7. Elektrischer Wechselstromerzeuger (31) nach einem beliebigen Anspruch 2 bis 6, wobei der erste Satz von Spulen (201, 203, 205, 207, 209, 211) mit dem zweiten Satz von Spulen (202, 204, 206, 208, 210, 212) elektrisch in Reihe geschaltet ist.

8. Elektrischer Wechselstromerzeuger (31) nach Anspruch 7, wobei der erste Satz von Spulen (201, 203, 205, 207, 209, 211) und der zweite Satz von Spulen (202, 204, 206, 208, 210, 212) durch einen Phasenwinkel (α) von 30° oder von 60° elektrisch getrennt sind.

9. Windturbine (21), umfassend einen elektrischen Wechselstromerzeuger (31) nach einem der vorhergehenden Ansprüche.

10. Verfahren zum Herstellen eines elektrischen Wechselstromerzeugers (31), umfassend:
Bereitstellen eines Stators (20), der eine Vielzahl von Zähnen (101, 102, 103, 104, 105, 106, 107, 108, 109, 110, 111, 112), die entlang einer Umfangsrichtung (X) von einem ersten Zahn (101) zu einem letzten Zahn (112) verteilt sind, und eine Vielzahl von Schlitzen (1, 2, 3, 4, 5, 6, 7, 8, 9, 10, 11, 12), die sich mit der Vielzahl von Zähnen (101, 102, 103, 104, 105, 106, 107, 108, 109, 110, 111, 112) in der Umfangsrichtung (X) abwechseln, aufweist,
Bereitstellen eines Rotors (30), der in Bezug auf den Stator (20) um eine Drehachse (Y) drehbar ist, wobei die Drehrichtung des Rotors (30) der Umfangsrichtung (X) entgegengestellt ist,
Anordnen einer konzentrierten sterngeschalteten Wicklungsgestaltung (100), umfassend eine Vielzahl von Spulen (201, 202, 203, 204, 205, 206, 207, 208, 209, 210, 211, 212), die jeweils auf der Vielzahl von Zähnen (101, 102, 103, 104, 105, 106, 107, 108, 109, 110, 111, 112) gewickelt sind und zu mindestens sechs Phasen (A1, A2, B1, B2, C1, C2) gehören, wobei die Spulen so gewickelt sind, dass in Anbetracht dreier benachbarter Spulen die Zwischenspule zwischen einer Spule, die in der gleichen Richtung wie die Zwischenspule gewickelt ist, und einer anderen Spule, die in der entgegengestellten Richtung zu der Zwischenspule gewickelt ist, eingefügt ist, wobei jeder Schlitz der Vielzahl von Schlitzen (1, 2, 3, 4, 5, 6, 7, 8, 9, 10, 11, 12) mindestens zwei Spulen der Vielzahl von Spulen (201, 202, 203, 204, 205, 206, 207, 208, 209, 210, 211, 212) beherbergt, wobei jede Phase (A1, A2, B1, B2, C1, C2) der mindestens sechs Phasen eine erste Spule (201, 202, 203, 204, 205, 206) und eine zweite Spule (207, 208, 209, 210, 211, 212) umfasst, wobei die zweite Spule (207, 208, 209, 210, 211, 212) einer Phase in einer entgegengestellten Richtung in Bezug auf die jeweilige erste Spule (201, 202, 203, 204, 205, 206) der gleichen Phase gewickelt ist,
Anordnen einer Vielzahl von Zwischenverbindungen (301, 302, 303, 304, 305, 306), welche die erste und die zweite Spule jeder Phase verbinden,
**dadurch gekennzeichnet, dass** die Vielzahl von Schlitzen (1, 2, 3, 4, 5, 6, 7, 8, 9, 10, 11, 12) einen ersten Satz von Schlitzen (1, 3, 5, 7, 9, 11) und einen zweiten Satz von Schlitzen (2, 4, 6, 8, 10, 12) umfasst, der sich mit dem ersten Satz von Schlitzen (2, 4, 6, 8, 10, 12) in der Umfangsrichtung (X) abwechselt, wobei Verbindungen der Spulen (201, 202, 203, 204, 205, 206, 207, 208, 209, 210, 211, 212) mit einem Eingabeleiter (401, 402, 403, 404, 405, 406) einer Phase (A1, A2, B1, B2, C1, C2) oder mit einem Neutralleiter (N1, N2) nur aus dem ersten Satz von Schlitzen (1, 3, 5, 7, 9, 11) herausgeführt sind,
wobei sich jede der Zwischenverbindungen (301, 302, 303, 304, 305, 306) nur zwischen zwei jeweiligen Schlitzen des zweiten Satzes von Schlitzen (2, 4, 6, 8, 10, 12) erstreckt.

11. Verfahren nach dem vorhergehenden Anspruch, wobei die konzentrierte Wicklungsgestaltung (100) mindestens einen ersten Satz von Spulen (201, 203, 205, 207, 209, 211) und einen zweiten Satz von Spulen (202, 204, 206, 208, 210, 212) umfasst, die mit dem ersten Satz von Spulen (201, 203, 205, 207, 209, 211) elektrisch in Reihe geschaltet sind, die einem ersten Satz dreier Phasen (A1, B1, C1) beziehungsweise einem zweiten Satz dreier Phasen (A2, B2, C2) der konzentrierten Wicklungsgestaltung (100) entsprechen.

## Revendications

1. Générateur électrique à courant alternatif (31) comprenant :
un stator (20) ayant une pluralité de dents (101, 102, 103, 104, 105, 106, 107, 108, 109, 110, 111, 112) réparties le long d'une direction circonférentielle (X) à partir d'une première dent (101) jusqu'à une dernière dent (112) et une pluralité d'encoches (1, 2, 3, 4, 5, 6, 7, 8, 9, 10, 11, 12) alternant avec la pluralité de dents (101, 102, 103, 104, 105, 106, 107, 108, 109, 110, 111, 112) dans la direction circonférentielle (X),
un rotor (30) mobile en rotation par rapport au stator (20) autour d'un axe de rotation (Y), le sens de rotation du rotor (30) étant opposé à la direction circonférentielle (X),
un schéma d'enroulement (100) concentré connecté en étoile comprenant une pluralité de bobines (201, 202, 203, 204, 205, 206, 207, 208, 209, 210, 211, 212) respectivement enroulées sur la pluralité de dents (101, 102, 103, 104, 105, 106, 107, 108, 109, 110, 111, 112) et appartenant à au moins six phases (A1, A2, B1, B2, C1, C2), les bobines étant enroulées de sorte que, lors de la considération de trois bobines adjacentes, la bobine intermédiaire est interposée entre une bobine enroulée dans le même sens que la bobine intermédiaire et une autre bobine enroulée dans le sens opposé à la bobine intermédiaire,
chaque encoche de la pluralité d'encoches (1, 2, 3, 4, 5, 6, 7, 8, 9, 10, 11, 12) logeant au moins deux bobines de ladite pluralité de bobines (201, 202, 203, 204, 205, 206, 207, 208, 209, 210, 211, 212), chaque phase (A1, A2, B1, B2, C1, C2) de l'au moins six phases comprenant une première bobine (201, 202, 203, 204, 205, 206) et une seconde bobine (207, 208, 209, 210, 211, 212), la seconde bobine (207, 208, 209, 210, 211, 212) d'une phase étant enroulée dans un sens opposé par rapport à la première bobine (201, 202, 203, 204, 205, 206) respective de la même phase,
une pluralité d'interconnexions (301, 302, 303, 304, 305, 306) connectant la première et la seconde bobine de chaque phase,
**caractérisé en ce que** la pluralité d'encoches (1, 2, 3, 4, 5, 6, 7, 8, 9, 10, 11, 12) comprend un premier ensemble d'encoches (1, 3, 5, 7, 9, 11) et un second ensemble d'encoches (2, 4, 6, 8, 10, 12) alternant avec le premier ensemble d'encoches (1, 3, 5, 7, 9, 11) dans la direction circonférentielle (X),
dans lequel
des connexions des bobines (201, 202, 203, 204, 205, 206, 207, 208, 209, 210, 211, 212) avec un conducteur d'entrée (401, 402, 403, 404, 405, 406) d'une phase (A1, A2, B1, B2, C1, C2) ou avec un conducteur neutre (N1, N2) sont sorties uniquement provenant du premier ensemble d'encoches (1, 3, 5, 7, 9, 11), dans lequel chacune des interconnexions (301, 302, 303, 304, 305, 306) s'étendant uniquement entre deux encoches respectives du second ensemble d'encoches (2, 4, 6, 8, 10, 12).

2. Générateur électrique à courant alternatif (31) selon la revendication 1, dans lequel le schéma d'enroulement concentré (100) comprend au moins un premier ensemble de bobines (201, 203, 205, 207, 209, 211) et un second ensemble de bobines (202, 204, 206, 208, 210, 212), correspondant respectivement à un premier ensemble de trois phases (A1, B1, C1) et à un second ensemble de trois phases (A2, B2, C2) du schéma d'enroulement concentré (100).

3. Générateur électrique à courant alternatif (31) selon la revendication 1, dans lequel chacune de la pluralité d'encoches (1, 2, 3, 4, 5, 6, 7, 8, 9, 10, 11, 12) s'étend radialement à partir d'un sommet d'encoche (1a, 2a, 3a, 4a, 5a, 6a, 7a, 8a, 9a, 10a, 11a, 12a) jusqu'à un fond d'encoche (1b, 2b, 3b, 4b, 5b, 6b, 7b, 8b, 9b, 10b, 11b, 12b), chaque connexion avec les conducteurs d'entrée (401, 402, 403, 404, 405, 406) et les conducteurs neutres (N1, N2) étant prévue au niveau des fonds d'encoche (1b, 2b, 3b, 4b, 5b, 6b, 7b, 8b, 9b, 10b, 11b, 12b).

4. Générateur électrique à courant alternatif (31) selon la revendication 2 ou 3, dans lequel le premier ensemble d'encoches (1, 3, 5, 7, 9, 11) comprend un premier sous-ensemble d'encoches (1, 5, 9) et un second sous-ensemble de bobines (3, 7, 11) alternant avec le premier sous-ensemble d'encoches (1, 5, 9), les bobines (201, 202, 205, 206, 209, 210) dans le premier sous-ensemble d'encoches (1, 5, 9) étant connectées avec les conducteurs d'entrée (401, 402, 403, 404, 405, 406), les bobines (203, 204, 207, 208, 211, 212) dans le second sous-ensemble de bobines (3, 7, 11) étant connectées avec les conducteurs neutres.

5. Générateur électrique à courant alternatif (31) selon la revendication 4, dans lequel les deux bobines (201, 202, 205, 206, 209, 210) dans chaque encoche du premier sous-ensemble d'encoches (1, 5, 9) sont respectivement connectées avec un conducteur d'entrée (401, 402, 403, 404, 405, 406) du premier ensemble de trois phases (A1, B1, C1) et un conducteur d'entrée (401, 402, 403, 404, 405, 406) du second ensemble de trois phases (A2, B2, C2).

6. Générateur électrique à courant alternatif (31) selon l'une quelconque des revendications 3 à 5, dans lequel chacune des interconnexions (301, 302, 303, 304, 305, 306) s'étend entre le sommet d'encoche (12a, 2a, 4a, 6a) d'une encoche (12, 2, 4, 6) jusqu'au fond d'encoche (6b, 8b, 10b, 12b) d'une autre encoche (6, 8, 10, 12).

7. Machine électrique à courant alternatif (31) selon l'une quelconque des revendications 2 à 6, dans laquelle le premier ensemble de bobines (201, 203, 205, 207, 209, 211) est connecté électriquement en série au second ensemble de bobines (202, 204, 206, 208, 210, 212).

8. Générateur électrique à courant alternatif (31) selon la revendication 7, dans lequel le premier ensemble de bobines (201, 203, 205, 207, 209, 211) et le second ensemble de bobines (202, 204, 206, 208, 210, 212) sont séparés électriquement par un angle de phase (α) de 30° ou de 60°.

9. Éolienne (21) comprenant un générateur électrique à courant alternatif (31) selon l'une quelconque des revendications précédentes.

10. Procédé de fabrication d'un générateur électrique à courant alternatif (31) comprenant :
la fourniture d'un stator (20) ayant une pluralité de dents (101, 102, 103, 104, 105, 106, 107, 108, 109, 110, 111, 112) réparties le long d'une direction circonférentielle (X) à partir d'une première dent (101) jusqu'à une dernière dent (112) et une pluralité d'encoches (1, 2, 3, 4, 5, 6, 7, 8, 9, 10, 11, 12) alternant avec la pluralité de dents (101, 102, 103, 104, 105, 106, 107, 108, 109, 110, 111, 112) dans la direction circonférentielle (X),
la fourniture d'un rotor (30) mobile en rotation par rapport au stator (20) autour d'un axe de rotation (Y), le sens de rotation du rotor (30) étant opposé à la direction circonférentielle (X), l'agencement d'un schéma d'enroulement (100) concentré connecté en étoile comprenant une pluralité de bobines (201, 202, 203, 204, 205, 206, 207, 208, 209, 210, 211, 212) respectivement enroulées sur la pluralité de dents (101, 102, 103, 104, 105, 106, 107, 108, 109, 110, 111, 112) et appartenant à au moins six phases (A1, A2, B1, B2, C1, C2), les bobines étant enroulées de sorte que, lors de la considération de trois bobines adjacentes, la bobine intermédiaire est interposée entre une bobine enroulée dans le même sens que la bobine intermédiaire et une autre bobine enroulée dans le sens opposé à la bobine intermédiaire, chaque encoche de la pluralité d'encoches (1, 2, 3, 4, 5, 6, 7, 8, 9, 10, 11, 12) logeant au moins deux bobines de ladite pluralité de bobines (201, 202, 203, 204, 205, 206, 207, 208, 209, 210, 211, 212), chaque phase (A1, A2, B1, B2, C1, C2) de l'au moins six phases comprenant une première bobine (201, 202, 203, 204, 205, 206) et une seconde bobine (207, 208, 209, 210, 211, 212), la seconde bobine (207, 208, 209, 210, 211, 212) d'une phase étant enroulée dans un sens opposé par rapport à la première bobine (201, 202, 203, 204, 205, 206) respective de la même phase,
l'agencement d'une pluralité d'interconnexions (301, 302, 303, 304, 305, 306) connectant la première et la seconde bobine de chaque phase,
**caractérisé en ce que** la pluralité d'encoches (1, 2, 3, 4, 5, 6, 7, 8, 9, 10, 11, 12) comprend un premier ensemble d'encoches (1, 3, 5, 7, 9, 11) et un second ensemble d'encoches (2, 4, 6, 8, 10, 12) alternant avec le premier ensemble d'encoches (1, 3, 5, 7, 9, 11) dans la direction circonférentielle (X), dans lequel des connexions des bobines (201, 202, 203, 204, 205, 206, 207, 208, 209, 210, 211, 212) avec un conducteur d'entrée (401, 402, 403, 404, 405, 406) d'une phase (A1, A2, B1, B2, C1, C2) ou avec un conducteur neutre (N1, N2) sont sorties uniquement provenant du premier ensemble d'encoches (1, 3, 5, 7, 9, 11),
dans lequel
chacune des interconnexions (301, 302, 303, 304, 305, 306) s'étendant uniquement entre deux encoches respectives du second ensemble d'encoches (2, 4, 6, 8, 10, 12).

11. Procédé selon la revendication précédente, dans lequel le schéma d'enroulement concentré (100) comprend au moins un premier ensemble de bobines (201, 203, 205, 207, 209, 211) et un second ensemble de bobines (202, 204, 206, 208, 210, 212) connectées électriquement en série avec le premier ensemble de bobines (201, 203, 205, 207, 209, 211), correspondant respectivement à un premier ensemble de trois phases (A1, B1, C1) et à un second ensemble de trois phases (A2, B2, C2) du schéma d'enroulement concentré (100).
